(19) Europäisches Patentamt

European Patent Office

Office européen des brevets

(11) **EP 0 684 090 B1**

(12) **EUROPÄISCHE PATENTSCHRIFT**

(45) Veröffentlichungstag und Bekanntmachung des Hinweises auf die Patenterteilung:
**04.02.1998 Patentblatt 1998/06**

(51) Int. Cl.$^6$: **B21B 37/16**, G05D 5/02, B21B 37/66

(21) Anmeldenummer: **95103975.9**

(22) Anmeldetag: **17.03.1995**

(54) **Verfahren zur Unterdrückung des Einflusses von Walzenexzentrizitäten auf die Regelung der Walzgutdicke in einem Walzgerüst**

Method of suppressing the influence of roll eccentricity on the adjustment of the thickness of rolling stock in a roll stand

Procédé pour la suppression d'influence d'excentricité de cylindre sur le réglage d'épaisseur de matières à laminer dans une cage de laminoir

(84) Benannte Vertragsstaaten:
**DE GB IT**

(30) Priorität: **29.03.1994 DE 4410962**

(43) Veröffentlichungstag der Anmeldung:
**29.11.1995 Patentblatt 1995/48**

(73) Patentinhaber:
**SIEMENS AKTIENGESELLSCHAFT**
**80333 München (DE)**

(72) Erfinder:
- **Jungkunz, Clemens, Dipl.-Ing.**
  **D-91056 Erlangen (DE)**
- **Berger, Klaus**
  **D-91315 Höchstadt (DE)**
- **Steidl, Siegbert, Dipl.-Ing.**
  **D-91074 Herzogenaurach (DE)**

(56) Entgegenhaltungen:
| | |
|---|---|
| EP-A- 0 170 016 | EP-A- 0 252 731 |
| EP-A- 0 424 709 | DE-A- 2 440 166 |
| DE-A- 4 231 615 | DE-C- 2 643 686 |
| US-A- 3 961 509 | US-A- 4 521 859 |
| US-A- 4 580 224 | |

**Beschreibung**

Die Erfindung betrifft ein Verfahren zur Unterdrükkung des Einflusses von Walzenexzentrizitäten auf die Regelung der Walzgutdicke in einem Walzgerüst, wobei in der Dickenregelung eine für von den Walzenexzentrizitäten verursachte Signalschwankungen unempfindliche Totzone vorgesehen ist, deren Zonenbreite in Abhängigkeit von der Größe der Signalschwankungen variiert wird.

Bei der Regelung der Walzgutdicke in einem Walzgerüst besteht die Schwierigkeit, daß die Walzgutdicke als interessierende Regelgröße nicht ohne weiteres regeltechnisch auswertbar am Ort ihrer Entstehung, nämlich dem Walzspalt, gemessen werden kann und daher nicht zur unmittelbaren Ausregelung von Störungen, wie z. B. Exzentrizitäten der Walzen, herangezogen werden kann. Nach dem sogenannten Gaugemeter-Prinzip kann jedoch die Austrittsdicke $h_a$ des Walzgutes aus dem Walzspalt rechnerisch aus der Anstellposition s der Walzen, der Walzkraft $F_W$ und der Federkonstanten $c_G$ des Walzgerüsts zu

$$h_a + \Delta R = s + F_w/c_G \qquad (1)$$

bestimmt werden. Bei dem sogenannten AGC-(Automatic-Gauge-Control-)Verfahren wird ausgehend von dieser Beziehung mittels eines Walzlastdetektors die Walzkraft detektiert und zur Regelung der Walzgutdicke herangezogen. Wenn sich der Walzspalt beispielsweise aufgrund einer Erhöhung der Einlaufdicke des Walzgutes vergrößert, führt dies zu einem Anstieg der Walzkraft; dieser Anstieg wird detektiert, wobei durch die Regelung die Anstellposition s der Walzen verringert wird, so daß die Walzkraft $F_W$ weiter erhöht und die Walzgutdicke wieder auf ihren Sollwert zurückgeregelt wird. Wie jedoch die Gleichung (1) zeigt, steht die Walzgutdicke $h_a$ nicht allein, sondern nur zusammen mit der Walzenexzentrizität $\Delta R$ zur Verfügung, die beim Walzprozeß eine periodische Zu- und Abnahme der Walzkraft $F_W$ verursacht. Die durch die Exzentrizitäten verursachten Zu- und Annahmen der Walzkraft $F_W$ werden jedoch durch das AGC-System fälschlicherweise als Zunahme bzw. Abnahme des Walzspaltes interpretiert, wodurch automatisch über die Anstellposition s die Walzkraft $F_W$ vergrößert bzw. verringert wird und damit die Exzentrizitäten in ihrem vollen Umfang in das Walzgut eingewalzt werden.

Um diesen negativen Einfluß der Walzenexzentrizitäten auf die Regelung der Walzgutdicke zu verhindern, ist es aus der DE-C 26 43 686 bekannt, in der Regelung eine Totzone vorzusehen, die gegenüber den von den Walzenexzentrizitäten vorgerufenen Signalschwankungen unempfindlich ist. Dabei wird die Totzonenbreite in Abhängigkeit von den Amplituden der Signalschwankungen variiert und so an das Ausmaß der Exzentrizitäten angepaßt.

In der deutschen Patentanmeldung DE-A 42 31 615 wird vorgeschlagen, die Variation der Zonenbreite in Ahhängigkeit von einer laufenden statistischen Auswertung der Signalschwankungen vorzunehmen, wobei vorzugsweise deren Standardabweichung bestimmt wird.

Da die gesamten Signalschwankungen als Exzentrizität interpretiert werden, führen echte Dickenschwankungen des Walzgutes zu einer Vergrößerung der Totzonenbreite und damit zu einem langsameren Ausregeln des Dickenfehlers. Der Erfindung liegt daher die Aufgabe zugrunde, die Anpassung der Totzonenbreite in Abhängigkeit von den auftretenden Exzentrizitäten zu optimieren.

Gemäß der Erfindung wird die Aufgabe dadurch gelöst, daß bei dem Verfahren der eingangs angegebenen Art die zur Variation der Zonenbreite herangezogenen Signalschwankungen durch ein Bandpaßfilter gefiltert werden, dessen Mittenfrequenz der Grundschwingungsfrequenz der Walzenexzentrizitäten entspricht. Durch die frequenzselektive Steuerung der Totzonenbreite wird sichergestellt, daß lediglich Signalschwankungen mit der Exzentrizitätsfrequenz die Breite der Totzone vergrößern können. Sind keine Signalanteile dieser Frequenz vorhanden, so bleibt die Totzone inaktiv, wodurch insbesondere bleibende Dickenfehler vermieden werden können.

Das Frequenzspektrum der Exzentrizitäten beinhaltet im wesentlichen die Grundfrequenzen der exzentrizitätsbehafteten Walzen des Walzgerüsts, wobei es sich in der Regel um die Stützwalzen handelt. Es sind aber auch höhere harmonische Oberschwingungen vorhanden, die allerdings häufig nur mit verminderten Amplituden in Erscheinung treten. Soll auch der Einfluß der Oberschwingungen der Walzenexzentrizitäten auf die Regelung der Walzgutdicke unterdrückt werden, so ist im Rahmen der Erfindung vorgesehen, daß die Signalschwankungen durch mindestens ein weiteres Bandpaßfilter gefiltert werden, dessen Mittenfrequenz der ersten bzw. weiteren Oberschwingungsfrequenz der Walzenexzentrizität entspricht, und daß das Summensignal der Bandpässe zur Variation der Totzonenbreite herangezogen wird.

Die Grundschwingungsfrequenz und die Oberschwingungsfrequenzenwerden aus der Drehzahl der exzentrizitätsbehafteten Walzen ermittelt. Wenn dabei z. B. die Drehzahl an den angetriebenen Arbeitswalzen gemessen wird, während die Exzentrizitäten durch die Stützwalzen verursacht werden, so wird die gemessene Drehzahl der Arbeitswalzen über das Verhältnis des Durchmessers der Arbeitswalzen zu dem der Stützwalzen in die Drehzahl der exzentrizitätsbehafteten Stützwalzen umgerechnet.

Die Variation der Totzonenbreite erfolgt vorzugsweise in Abhängigkeit von einer laufenden statistischen Auswertung der bandpaßgefilterten Signalschwankungen. Auf diese Weise wird dem Umstand Rechnung getragen, daß der Einfluß der Walzenexzentrizitäten auf die Regelung der Walzgutdicke und damit die entsprechenden Signalschwankungen in der Regel nicht ohne weiteres vorhersagbare Größen sind, weswegen ihre Erfassung und Auswertung für die Regelung in vorteilhafter Weise durch die statistische Signalauswertung erfolgt.

Dabei besteht die statistische Auswertung vorzugsweise in einer Bestimmung der Standardabweichung der bandpaßgefilterten Signalschwankungen, womit eine das aktuelle Ausmaß der exzentrizitätsabhängigen Signalschwankungen optimal wiedergebende Größe zur Einstellung der Totzone ermittelt wird. Dabei werden die für die Standardabweichung laufend ermittelten Werte mit einem vorgegebenen Faktor in der Größenordnung von etwa 1 bis 4, vorzugsweise 1,5, gewichtet.

Aus der EP-B 0 170 016 ist ein Verfahren zur Unterdrückung des Einflusses der Walzenexzentrizitäten auf die Regelung der Walzgutdicke bekannt, bei dem die Grundschwingung und gegebenenfalls ausgewählte Oberschwingungen der Walzenexzentrizitäten durch das Ausgangssignal eines rückgekoppelten Oszillators oder das Summenausgangssignal mehrerer rückgekoppelter Oszillatoren nachgebildet werden und das Ausgangs- bzw. Summenausgangssignal der Dickenregelung aufgeschaltet wird. Wird ein solches Exzentrizitätskompensationsverfahren in Verbindung mit der exzentrizitätsabhängigen Totzonensteuerung vorgesehen, so ist im Rahmen der Erfindung vorgesehen, daß das zur Variation der Totzonenbreite herangezogene Summensignal der Bandpässe mindestens eine weitere Oberschwingung enthält, als das von dem mindestens einen Oszillator erzeugte Ausgangs- bzw. Summenausgangssignal. Die Exzentrizitätskompensation durch den rückgekoppelten Oszillator bewirkt, daß die in der Regelung verbleibenden exzentrizitätsverursachten Signalschwankungen nur noch Oberschwingungen enthalten, die von dem mindestens einen Oszillator nicht nachgebildet werden. Die zur Steuerung der Totzonenbreite herangezogenen verbleibenden Oberschwingungen führen zu einer Verringerung der Totzonenbreite, ohne daß diese jedoch gänzlich auf Null reduziert wird. Hierdurch wird eine bessere Aussteuerung der Dickenregelung insbesondere im Kleinsignalverhalten durch solche Signalanteile erreicht, die nicht exzentrizitätsbedingt sind.

Zur Unterdrückung des Einflusses der Walzenexzentrizitäten auf die Regelung der Walzgutdicke können ferner auch die mit der Mittenfrequenz der Grundschwingung und gegebenenfalls mit den Mittenfrequenzen von Oberschwingungen bandpaßgefilterten Signalschwankungen der Dickenregelung aufgeschaltet werden, wobei das zur Variation der Totzonenbreite herangezogene Summensignal der Bandpässe mindestens eine weitere Oberschwingung enthält, als die der Dickenregelung aufgeschalteten bandpaßgefilterten Signalschwankungen. Letzteres ist nötig, da anderenfalls unter der Voraussetzung einer idealen Kompensation sowohl der Grund- als auch aller Oberschwingungen der Walzenexzentrizitäten die Totzonenbreite gänzlich auf Null reduziert würde und somit vorhandene höhere Oberschwingungen die Dickenregelung unerwünscht anregen könnten.

Zur Erläuterung der Erfindung wird im folgenden auf die Figuren der Zeichnung Bezug genommen; im einzelnen zeigen

FIG 1 ein Beispiel für die Positionsregelung eines Walzgerüsts,

FIG 2 ein Beispiel für eine direkte digitale Regelung der Walzgutdicke mit einer steuerbaren Totzone sowie einem nach dem Beobachterprinzip arbeitenden Exzentrizitätskompensator zur Unterdrückung des Einflusses von Walzenexzentrizitäten und

FIG 3 ebenfalls eine Dickenregelung mit steuerbarer Totzone und einer anderen Ausführung für einen Exzentrizitätskompensator.

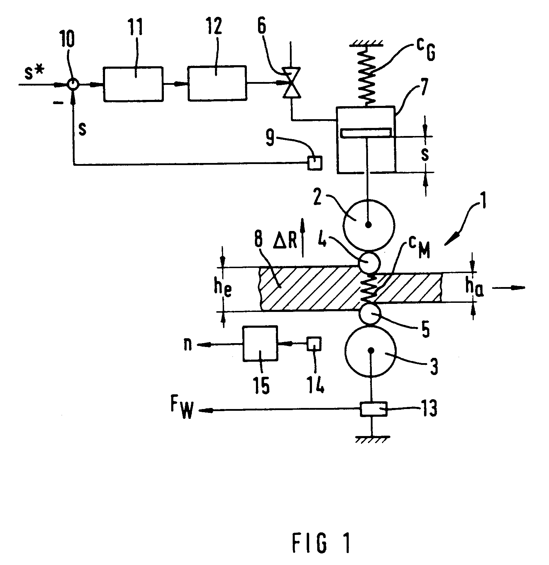

FIG 1 zeigt ein Beispiel für die Positionsregelung eines Walzgerüsts 1 mit einer oberen und unteren Stützwalze 2 bzw. 3, zwei Arbeitswalzen 4 und 5, einer über ein Steuerventil 6 betätigbaren hydraulischen Anstellvorrichtung 7 zur Einstellung der Walzenanstellposition s und einer die Elastizität des Walzgerüsts 1 symbolisierenden Feder $c_G$. Das Walzgut 8, dem im Walzspalt eine äquivalente Materialfeder $c_M$ zugeordnet werden kann, wird durch die beiden Arbeitswalzen 4 und 5 von einer Einlaufdicke $h_e$ auf eine Auslaufdicke $h_a$ heruntergewalzt. Die Walzenexzentrizitäten können durch eine effektive Änderung des Walzenradius $\Delta R$ beschrieben werden. Die Anstellposition s wird mit einem Positionsaufnehmer 9 an der Anstellvorrichtung 7 gemessen und als Istwert an einem Summierpunkt 10 mit einem Sollwert s* der Walzenanstellposition verglichen, wobei das Vergleichsergebnis über einen Positionsregler 11 und einen nachgeordneten Stellantrieb 12 zur Betätigung des Stellventils 6 und damit zur Einstellung der Anstellposition s herangezogen wird. Die Walzkraft $F_W$ wird mittels eines Druckfühlers 13 an dem Walzgerüst 1 gemessen. Wie untenstehend noch erläutert wird, ist es für eine Kompensation der Walzenexzentrizitäten $\Delta R$ erforderlich, die Drehzahl der exzentrizitätsbehafteten Walzen zu messen. Unter der vereinfachenden Annahme, daß sich die Ober- und Unterwalzen des Walzgerüsts 1 gleich schnell drehen, genügt es, die Drehzahl lediglich einer angetriebenen Walze, z. B. der Arbeitswalze 5 mittels eines Drehzahlmessers 14 zu erfassen. Sind dabei, wie in den meisten Fällen, die Stützwalzen 2 und 3 die exzentrizitätsbehafteten Walzen, so wird in einer Einheit 15 die gemessene Drehzahl der Arbeitswalze 5 über das Verhältnis des Durchmessers der Arbeitswalze 5 zu dem der Stützwalze 3 in die Drehzahl n der unteren Stützwalze 3 umgerechnet.

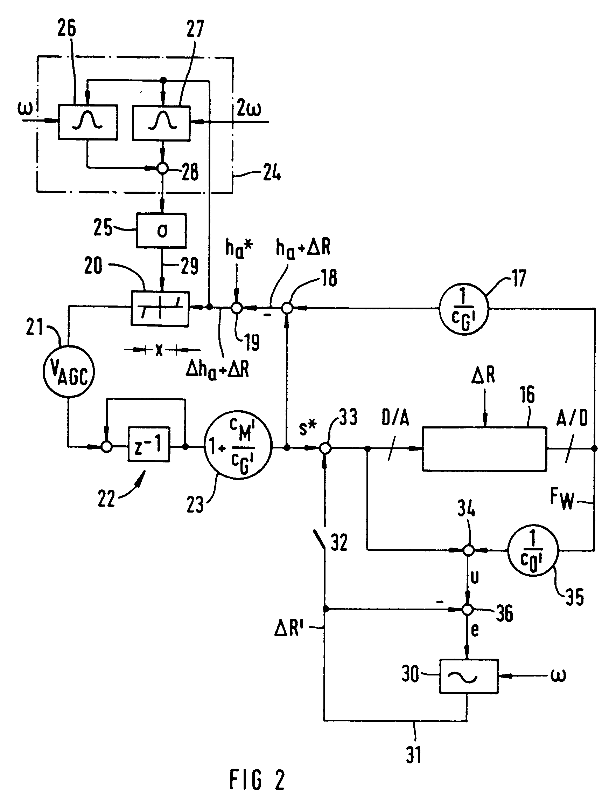

FIG 2 zeigt ein Beispiel für eine direkte digitale Regelung der Walzgutdicke nach dem AGC-(Automatic Gauge Control-)Verfahren. Mit 16 ist die von der in FIG 1 gezeigten Positionsregelung und dem Walzgerüst gebildete Regelstrecke bezeichnet, der eingangsseitig über einen Digital-/Analog-Umsetzer der Sollwert s* für die Walzenanstellung zugeführt wird. Die Regelstrecke 16 liefert als Ausgangssignal die von den Walzenexzentrizitäten $\Delta R$ beeinflußte Walzkraft $F_W$, die gemessen wird und dabei über einen Analog-/Digital-Umsetzer in einen Digitalwert umgesetzt wird. Ausgehend von der oben angegebenen Gleichung (1) für die Walzkraft $F_W$ wird bei der Dickenregelung die gemessene Walzkraft $F_W$ in einem Multiplizierglied 17 mit dem Kehrwert der berechneten Gerüstfederkonstanten $1/c_G'$ multipliziert und anschließend in einem Summierglied 18 mit dem Sollwert s* der Walzenanstellung zu einem Summensignal aus dem berechneten Istwert $h_a$ der Austrittsdicke des Walzgutes 8 und der Walzenexzentrizität $\Delta R$ aufsummiert. Das so erhaltene Summensignal $h_a+\Delta R$ wird in einem nachfolgenden Summierglied 19 mit dem Sollwert $h_a^*$ der Walzgutdicke verglichen. Das Differenzsignal am Ausgang des Summierpunktes 19 enthält also nicht nur die Differenz $\Delta h_a$ zwischen dem Sollwert $h_a^*$ und dem Istwert $h_a$ der Walzgutdicke, sondern auch von den Exzentrizitäten $\Delta R$ hervorgerufene Signalschwankungen. Um diese exzentrizitätsbedingten Signalschwankungen $\Delta R$ innerhalb der Dickenregelung zu unterdrücken, wird das Differenzsignal am Ausgang des Summierpunktes 19 einem Übertragungsglied 20 mit einer variablen Totzone x zugeführt, das nur außerhalb der Totzone x liegende Signalamplituden überträgt. Wie untenstehend näher erläutert wird, wird die Breite der Totzone x so eingestellt, daß sie die von den Walzenexzentrizitäten $\Delta R$ verursachten Signalschwankungen unterdrückt. Das von den exzentrizitätsbedingten Signalschwankungen $\Delta R$ befreite Ausgangssignal des Übertragungsgliedes 20 wird einem Walzspaltregler bestehend aus einem Verstärkungsglied 21 und einem digitalen Integrierer 22 zugeführt. Dem Walzspaltregler 21, 22 ist ein Korrekturverstärkungsglied 23 nachgeordnet, das das Ausgangssignal des Walzspaltreglers 21, 22 mit dem Faktor $1+c_M'/c_G'$ multipliziert, um so den Einfluß der Streckenverstärkung des Regelkreises mit $h_a/s = c_G/(c_M+c_G)$ auszugleichen, und ausgangsseitig den Sollwert s* der Walzenanstellposition für die Regelstrecke 16 bereitstellt.

Um die Breite der von dem Übertragungsglied 20 erzeugten Totzone x an die jeweilige Amplitude der Walzenexzentrizitäten $\Delta R$ anpassen zu können, wird das Differenzsignal $\Delta h_a + \Delta R$ am Ausgang des Summierpunkts 19 über eine Bandpaßfilteranordnung 24 einer Einrichtung 25 zur statistischen Auswertung der bandpaßgefilterten Signalschwankungen zugeführt. Die Bandpaßfilteranordnung 24 enthält ein erstes Bandpaßfilter 26, dessen Mittenfrequenz in Abhängigkeit von der gemessenen Drehzahl n der exzentrizitätsbehafteten Walzen auf die Frequenz $\omega$ der Grundschwingung der Walzenexzentrizitäten $\Delta R$ mit $\omega = 2\pi n$ eingestellt ist. Darüber hinaus enthält die Bandpaßfilteranordnung 24 noch ein weiteres Bandpaßfilter 27, dessen Mittenfrequenz mit $2\omega$ auf die Frequenz der ersten Oberschwingung der Walzenexzentrizitäten $\Delta R$ eingestellt ist. In einem Summierpunkt 28 werden die Ausgangssignale der beiden Bandpaßfilter 26 und 27 aufsummiert, bevor sie zu der Einrichtung 25 zur statistischen Auswertung der bandpaßgefilterten Signalschwankungen gelangen. In der Einrichtung 25 wird die Standardabweichung der bandpaßgefilterten Signalschwankungen ermittelt und mit einem vorgegebenen Faktor von beispielsweise 1,5 multipliziert, bevor sie einem Steuereingang 29 des Übertragungsgliedes 20 zur Einstellung der Totzonenbreite x zugeführt wird. Durch die von der Drehzahl n der exzentrizitätsbehafteten Walzen gesteuerte Bandpaßfilterung der zur Einstellung der Totzonenbreite x herangezogenen Signalschwankungen wird verhindert, daß die gesamte Schwankung des Differenzsignals am Ausgang des Summierpunkts 19 als Exzentrizität interpretiert wird, was bei echten Dickenschwankungen zu einer Vergrößerung der Totzonenbreite x und damit zu einem langsameren Ausregeln des Dickenfehlers führen würde.

Bei dem in FIG 2 gezeigten Ausführungsbeispiel einer Dickenregelung ist zusätzlich ein Störbeobachter in Form eines gegengekoppelten Oszillators 30 vorgesehen, der an seinem Ausgang 31 im eingeschwungenen Zustand die Grundschwingung der Walzenexzentrizitäten $\Delta R$ nachbildet, wobei die nachgebildete Störung $\Delta R'$ über einen Schalter 32 und ein Summierglied 33 dem Sollwert s* der Walzenanstellposition am Eingang der Regelstrecke 16 aufgeschaltet wird. Dabei wird die Frequenz $\omega$ des Oszillators 22 in Abhängigkeit von der gemessenen Walzendrehzahl n mit $\omega = 2\pi n$ eingestellt. An einem Summierpunkt 34 werden der mit der nachgebildeten Walzenexzentrizität überlagerte Sollwert der Walzenanstellung s* + $\Delta R'$ und die in einem Multiplizierglied 35 mit dem berechneten Kehrwert $1/c_0' = 1/c_M' + 1/c_G'$ der Gesamtsteifigkeit der Gerüst-und Materialfeder multiplizierte gemessene Walzkraft $F_W$ zu einem Summensignal u verknüpft. Dieses Summensignal u und das Ausgangssignal $\Delta R'$ des Oszillators 30 werden an einem weiteren Summierpunkt 36 miteinander verglichen, wobei ein Korrektursignal $e = u - \Delta R'$ gebildet wird, über das der Oszillator 30 in Amplitude und Phase so lange nachgeführt wird, bis die nachgebildete Störung $\Delta R'$ und das Summensignal u übereinstimmen und der Fehler e somit zu Null wird. Dem Summierpunkt 34 kann anstelle des mit der Störnachbildung $\Delta R'$ überlagerte Sollwert s* auch der Istwert s der Walzenanstellung zugeführt werden, jedoch ist bei dem in FIG 2 gezeigten Beispiel aufgrund der Verwendung des Sollwertes s* der Einfluß der Dynamik der Postionsregelung in der Regelstrecke 16 ohne jeden Einfluß auf die Kompensation der Walzenexzentrizitäten $\Delta R$, so daß deren Grundschwingungsanteil asymptotisch vollständig in seiner Auswirkung auf die Walzkraft $F_W$ eliminiert wird. Da der Grundschwingungsanteil der Walzexzentrizität $\Delta R$ in der Dickenregelung nicht mehr vorhanden ist, erfolgt die Steuerung der Totzonenbreite x des Übertragungsgliedes 20 im wesentlichen nur noch in Abhängigkeit von der von dem Bandpaßfilter 27 herausgefilterten ersten Oberschwingung der Walzenexzentrizitäten ΔR. Da dieser Schwingungsanteil in der Regel geringer ist, als der kompensierte Grundschwingungsanteil, wird die Totzonenbreite x beim Einschalten des Störbeobachters mit dem Oszillator 30 verringert, was zu einer besseren Aussteuerung der Dickenregelung insbesondere im Kleinsignalverhalten durch solche Signalanteile führt, die nicht exzentrizitätsbedingt sind.

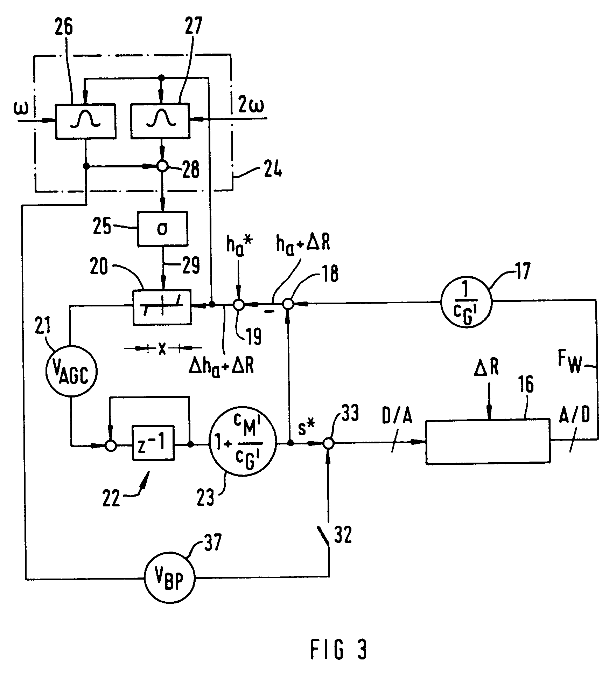

Die in FIG 3 gezeigte Dickenregelung unterscheidet sich von dem Ausführungsbeispiel nach FIG 2 dadurch, daß der Störbeobachter mit dem Oszillator 30 fehlt und statt dessen das Ausgangssignal des Bandpaßfilters 26, dessen Mittenfrequenz der Grundschwingungsfrequenz der Walzenexzentrizitäten ΔR entspricht, über ein Verstärkungsglied 37 und den Schalter 32 an dem Summierpunkt 33 dem Sollwert s* der Walzenanstellposition aufgeschaltet wird. Es wird also lediglich der Grundschwingungsanteil kompensierend aufgeschaltet und nicht auch noch die erste Oberschwingung, da anderenfalls unter der Voraussetzung einer idealen Kompensation sowohl des Grund- als auch des Oberschwingungsanteils die Totzonenbreite x gänzlich zu Null reduziert würde und somit höhere harmonische Oberschwingungen die Dickenregelung unerwünscht anregen könnten.

**Patentansprüche**

1. Verfahren zur Unterdrückung des Einflusses von Walzenexzentrizitäten (ΔR) auf die Regelung der Walzgutdicke ($h_a$) in einem Walzgerüst (1), wobei in der Dickenregelung eine für von den Walzenexzentrizitäten (ΔR) verursachte Signalschwankungen unempfindliche Totzone (x) vorgesehen ist, deren Zonenbreite in Abhängigkeit von der Größe der Signalschwankungen variiert wird,
**dadurch gekennzeichnet,**
daß die zur Variation der Zonenbreite (x) herangezogenen Signalschwankungen durch ein Bandpaßfilter (26) gefiltert werden, dessen Mittenfrequenz der Grundschwingungsfrequenz (ω) der Walzenexzentrizitäten (ΔR) entspricht.

2. Verfahren nach Anspruch 1,
**dadurch gekennzeichnet,**
daß die Signalschwankungen durch mindestens ein weiteres Bandpaßfilter (27) gefiltert werden, dessen Mittenfrequenz der ersten bzw. weiteren Oberschwingungsfrequenzen (2ω) der Walzenexzentrizität (ΔR) entspricht, und daß das Summensignal der Bandpässe (26, 27) zur Variation der Totzonenbreite (x) herangezogen wird.

3. Verfahren nach Anspruch 1 oder 2,
**dadurch gekennzeichnet,**

daß die Grundschwingungsfrequenz (ω) bzw. die Oberschwingungsfrequenzen (2ω) aus der gemessenen Drehzahl (n) der exzentrizitätsbehafteten Walzen (z. B. 3) ermittelt wird.

4. Verfahren nach einem der vorangehenden Ansprüche,
**dadurch gekennzeichnet,**
daß die Variation der Zonenbreite (x) in Abhängigkeit von einer laufenden statistischen Auswertung der bandpaßgefilterten Signalschwankungen erfolgt.

5. Verfahren nach Anspruch 4,
**dadurch gekennzeichnet,**
daß die statistische Auswertung in einer Bestimmung der Standardabweichung (σ) der bandpaßgefilterten Signalschwankungen besteht.

6. Verfahren nach Anspruch 2 oder Anspruch 2 in Verbindung mit einem der Ansprüche 3 bis 5,
**dadurch gekennzeichnet,**
daß zur Unterdrückung des Einflusses der Walzenexzentrizitäten (ΔR) auf die Regelung der Walzgutdicke ($h_a$) ferner die Grundschwingung und gegebenenfalls ausgewählte Oberschwingungen der Walzenexzentrizitäten (ΔR) durch das Ausgangssignal eines rückgekoppelten Oszillators (30) oder das Summenausgangssignal mehrerer rückgekoppelter Oszillatoren nachgebildet werden, welches der Dickenregelung aufgeschaltet wird, und daß das zur Variation der Totzonenbreite (x) herangezogene Summensignal der Bandpässe (26, 27) mindestens eine weitere Oberschwingung enthält, als das von dem mindestens einen Oszillator (30) erzeugte Ausgangs- bzw. Summenausgangssignal (ΔR').

7. Verfahren nach Anspruch 2 oder Anspruch 2 in Verbindung mit einem der Ansprüche 3 bis 5,
**dadurch gekennzeichnet,**
daß zur Unterdrückung des Einflusses der Walzenexzentrizitäten (ΔR) auf die Regelung der Walzgutdicke ($h_a$) ferner die mit der Mittenfrequenz der Grundschwingung (ω) und gegebenenfalls mit den Mittenfrequenzen von Oberschwingungen bandpaßgefilterten Signalschwankungen der Dickenregelung aufgeschaltet werden, wobei das zur Variation der Totzonenbreite (x) herangezogene Summensignal der Bandpässe (26, 27) mindestens eine weitere Oberschwingung enthält, als die der Dickenregelung aufgeschalteten bandpaßgefilterten Signalschwankungen.

**Claims**

1. A method for suppressing the influence of roll eccentricities (ΔR) on the control of the rolling-stock

thickness ($h_a$) in a roll stand (1), whereby a dead-zone (x) insensitive to signal fluctuations resulting from the roll eccentricities ($\Delta R$) is provided in the thickness control, the width of said zone being varied as a function of the magnitude of the signal fluctuations,
characterised in that
the signal fluctuations used for varying the zone width (x) are filtered by a band-pass filter (26), the mid-frequency of said band-pass filter corresponding to the fundamental frequency ($\omega$) of the roll eccentricities ($\Delta R$).

2. A method according to Claim 1,
characterised in that
the signal fluctuations are filtered by at least one further band-pass filter (27) having a mid-frequency corresponding to the first or further harmonic component frequencies ($2\omega$), respectively, of the roll eccentricity ($\Delta R$) and in that the composite signal from the band-pass filters (26, 27) is used to vary the dead-zone width (x).

3. A method according to Claim 1 or 2,
characterised in that
the fundamental frequency ($\omega$) or the harmonic component frequencies ($2\omega$), respectively, is/are determined from the measured rotational speed (n) of the rolls subject to eccentricity (e.g. 3).

4. A method according to one of the preceding claims,
characterised in that
the zone width (x) is varied as a function of an ongoing statistical evaluation of the band-pass filtered signal fluctuations.

5. A method according to Claim 4,
characterised in that
the statistical evaluation consists in determining the standard deviation ($\sigma$) of the band-pass filtered signal fluctuations.

6. A method according to Claim 2 or Claim 2 in conjunction with one of the Claims 3 to 5,
characterised in that,
with a view to suppressing the influence of the roll eccentricities ($\Delta R$) on the control of the rolling-stock thickness ($h_a$), the fundamental component and, if applicable, selected harmonic components of the roll eccentricities ($\Delta R$) are in addition simulated by the output signal from a feedback oscillator (30) or the composite output signal from a plurality of feedback oscillators, said signal being applied to the thickness control, and in that the composite signal from the band-pass filters (26, 27) used for varying the dead-zone width (x) comprises at least one harmonic component more than the output signal or composite output signal ($\Delta R'$) generated by the at least one oscillator (30).

7. Method according to Claim 2 or Claim 2 in conjunction with one of Claims 3 to 5,
characterised in that,
with a view to suppressing the influence of the roll eccentricities ($\Delta R$) on the control of the rolling-stock thickness ($h_a$), the signal fluctuations band-pass filtered at the mid-frequency of the fundamental component ($\omega$) and, if applicable, at the mid-frequencies of harmonic components are, in addition, applied to the thickness control, the composite signal from the band-pass filters (26, 27) used for varying the dead-zone width (x) comprising at least one harmonic component more than the band-pass filtered signal fluctuations applied to the thickness control.

**Revendications**

1. Procédé pour supprimer l'influence d'excentricités ($\Delta R$) de cylindre sur la régulation de l'épaisseur ($h_a$) de produit à laminer dans une cage (1) de laminoir, une zone (x) morte, insensible à des fluctuations de signal provoquées par les excentricités ($\Delta R$) de cylindre, dont on fait varier la largeur de zone en fonction de la valeur des fluctuations de signal, étant prévue dans la régulation d'épaisseur, caractérisé en ce que l'on filtre les fluctuations de signal utilisées pour faire varier la largeur (x) de zone par un filtre (26) passe-bande dont la fréquence moyenne correspond à la fréquence ($\omega$) fondamentale des excentricités ($\Delta R$) de cylindre.

2. Procédé suivant la revendication 1, caractérisé en ce que l'on filtre les fluctuations de signal par au moins un filtre (27) passe-bande supplémentaire, dont la fréquence moyenne correspond aux fréquences ($2\omega$) harmoniques première et supplémentaire de l'excentricité ($\Delta R$) de cylindre, et en ce que l'on utilise le signal somme des passe-bandes (26, 27) pour faire varier la largeur (x) de la zone morte.

3. Procédé suivant la revendication 1 ou 2, caractérisé en ce que l'on détermine la fréquence ($\omega$) fondamentale et les fréquences ($2\omega$) harmoniques à partir de la vitesse (n) de rotation mesurée des cylindres (par exemple 3) affectés d'excentricité.

4. Procédé suivant l'une des revendications précédentes, caractérisé en ce que la variation de la largeur (x) de zone s'effectue en fonction d'une exploitation statistique continue des fluctuations de signal filtrées par passe-bande.

5. Procédé suivant la revendication 4, caractérisé en ce que l'exploitation statistique consiste en une détermination de l'écart-type ($\sigma$) des fluctuations de

signal filtrées par passe-bande.

6.  Procédé suivant la revendication 2 ou suivant la revendication 2 en liaison avec l'une des revendications 3 à 5, caractérisé en ce que, pour supprimer l'influence des excentricités ($\Delta R$) de cylindre sur la régulation de l'épaisseur ($h_a$) du produit à laminer, on simule de plus la composante fondamentale et éventuellement des harmoniques sélectionnées des excentricités ($\Delta R$) de cylindre par le signal de sortie d'un oscillateur (30) rétrocouplé ou par le signal de sortie somme de plusieurs oscillateurs rétrocouplés, le signal de sortie étant envoyé à la régulation d'épaisseur, et en ce que le signal somme des passe-bandes (26, 27), que l'on utilise pour faire varier la largeur (x) de la zone morte, contient au moins un autre harmonique que le signal de sortie ou le signal ($\Delta R'$) de sortie somme produit par le au moins un oscillateur (30).

7.  Procédé suivant la revendication 2 ou suivant la revendication 2 en liaison avec l'une des revendications 3 à 5, caractérisé en ce que, pour supprimer l'influence des excentricités ($\Delta R$) de cylindre sur la régulation de l'épaisseur ($h_a$) du produit à laminer, on envoie à la régulation d'épaisseur de plus les fluctuations de signal filtrées par passe-bande par la fréquence moyenne de la composante ($\omega$) fondamentale et éventuellement par les fréquences moyennes d'harmonique, le signal somme des passe-bandes (26, 27) que l'on utilise pour faire varier la largeur (x) de la zone morte comportant au moins un autre harmonique que les fluctuations de signal filtrées par passe-bande envoyées à la régulation d'épaisseur.

FIG 1

FIG 2

FIG 3